# EUROPÄISCHE PATENTSCHRIFT

(11) **EP 1 278 661 B1**
(45) Veröffentlichungstag und Bekanntmachung des Hinweises auf die Patenterteilung: **25.08.2004**
(21) Anmeldenummer: 01940199.1
(22) Anmeldetag: 27.04.2001
(51) Int. Cl.: B60R 21/20

(54) **AIRBAGVORRICHTUNG UND BETRIEBSVERFAHREN DAFÜR**
AIRBAG DEVICE AND OPERATING METHOD FOR THE SAME
SYSTEME D'AIRBAG ET PROCEDE D'UTILISATION CORRESPONDANT

(30) Priorität: 27.04.2000 DE 20007632 U
(43) Veröffentlichungstag der Anmeldung: 29.01.2003
(73) Patentinhaber: Volkswagen AG, 38436 Wolfsburg (DE)
(72) Erfinder: MÜLLER, Olaf, 65428 Rüsselsheim (DE)
(74) Vertreter: Lindner, Manfred Klaus, Dipl.-Phys.
(86) Internationale Anmeldenummer: PCT/DE2001/001594
(87) Internationale Veröffentlichungsnummer: WO 2001/081126

(56) Entgegenhaltungen:
- DE-A- 4 445 737
- DE-A- 19 726 878
- DE-A- 19 757 437
- DE-A- 19 846 992
- US-A- 5 360 231

## Beschreibung

Die Erfindung betrifft allgemein eine Airbagvorrichtung nach dem Oberbegriff des Anspruchs 1 sowie ein Betriebsverfahren dafür.

Insbesondere betrifft die vorliegende Erfindung eine Airbagvorrichtung mit einem Airbagmodul und einer Abdeckung sowie einer Öffnungsmechanik für letztere, so dass die Abdeckung geöffnet wird, bevor ein Airbag des Airbagmoduls durch eine so erzeugte Öffnung durch die Abdeckung hindurch zu einem Insassen eines Fahrzeuges hin austritt.

Die auf den vorliegenden Anmelder/Inhaber zurückgehenden älteren deutschen Patentanmeldungen 197 12 782.7,197 26 878.1 und 197 33 896.8, europäische Patentanmeldung 98 10 55 51.0, internationale Patentanmeldung PCT/DE 99/01564 sowie Gebrauchsmusteranmeldungen 298 08 317.5, 298 09 554.8, 298 19 165.2, 298 20 722.2, 299 05 000.9, 299 05 919.7, 299 07 102.2, 299 08 946.0, 299 10 059.6, 299 13 628.0 und 299 21247.5 befassen sich allgemein mit einer Airbagvorrichtung sowie einem Auslöseverfahren dafür. Die vorliegende Erfindung betrifft Verbesserungen sämtlicher in der früheren Anmeldung behandelten Techniken und Ausführungsbeispiele insbesondere hinsichtlich der Bauart der Airbagvorrichtung und Auslösesteuerung und im speziellen eine Ausgestaltung zur Steuerung einer Airbagklappe. Insofern ist der vollständige Offenbarungsgehalt dieser älteren Anmeldungen insbesondere hinsichtlich der Bauart der Airbagvorrichtung und Auslösesteuerung und im speziellen eine Ausgestaltung zur Steuerung einer Airbagklappe hiermit durch die Bezugnahmen vollumfänglich in die vorliegenden Unterlagen aufgenommen.

Stand der Technik ist, dass Airbags zur Öffnung von Airbagklappen derart viel Energie brauchen, dass sie Personen, die sich z.B. nicht angeschnallt mit ihrem Kopf am oder zu nah am Airbagaustritt befinden, beim Austritt das Genick brechen können. Als Abhilfe für dieses Problem sind in den vorerwähnten Anmeldungen Mechaniken und Verfahren geschaffen, mittels denen vor einem Austritt eines Airbags, der mit seinem Airbagmodul hinter einer Verkleidung eines Fahrzeuges untergebracht ist, diese Verkleidung oder Abdeckung aktiv geöffnet wird.

Der Airbag muss also nicht mehr selbst die Öffnung in der Verkleidung oder Abdeckung erzeugen und braucht auch nicht die hierfür erforderliche Energie aufzubringen. indem zunächst ein entsprechend hoher Gasdruck in dem Airbag erzeugt werden muss, damit er die Abdeckung aufdrücken kann. Der Airbag kann sich vielmehr durch die bereits vorhandene Öffnung hindurch frei entfalten.

Das Ziel der vorliegenden Erfindung ist, speziell für zweiteilige Abdeckungen einer Airbagvorrichtung eine Bauart und ein Verfahren anzugeben, womit die Techniken der eingangs angegebenen Anmeldungen weiter verbessert werden und eine Austrittsöffnung für den Airbag auf schnelle und einfache Weise erzeugt werden kann, um Verletzungen bei Personen durch die Airbagauslösung zu vermeiden.

Dieses Ziel wird durch Airbagvorrichtungen nach dem Anspruch 1 sowie Betriebsverfahren nach dem Anspruch 7 erreicht. Insbesondere kann die vorliegende Erfindung als Ergänzung zu den eingangs angegebenen vielfältigen Schutzrechtsanmeldungen der gleichen Anmelderin zum Einsatz kommen und weiterhin zu einer Reduzierung der Aggressivität des Bags beitragen, indem auf ungefährliche Weise eine Öffnung zum Austritt eines Airbags in einer Armaturentafel erzeugt wird.

Die Erfindung besteht insbesondere in Mechaniken oder Bauarten und deren Betriebsverfahren, die bei speziell mehrteiligen Armaturentafeln deren Ober- oder/oder deren Unterteil derartig aufbiegen, dass eine fischmaulartige Öffnung entsteht. Dazu wird eine spezielle Airbagmodul- oder -vorrichtungsmechanik sowie ein entsprechendes Verfahren zur Öffnung einer zweigeteilten Armaturentafel vor einem Airbagaustritt eingesetzt.

Dieses "Aufbiegen" erfolgt erfindungsgemäß vorzugsweise nicht durch den Airbag, sondern durch eine Mechanik, die auch ihre pyrotechnische Energie zum Antrieb von einem Generator bezieht.

Der Generator kann ein zusätzlicher Generator sein, der einen Kolben in einem Zylinder antreibt. Am Kolben können Seile, Hebel oder Bänder angebracht sein, die eine Mechanik betätigen, die eine entsprechend geteilte Armaturentafel fischmaulartig öffnen.

Besonders bevorzugt ist der Airbaggenerator zur Gaserzeugung zum Aufblasen des Airbags gleichzeitig der Energiespender zur Öffnung der Armaturentafel. Insbesondere ist zum Antrieb ein tassenartiger Behälter oder Kolben über den Generator gestülpt und von diesem nach einer Auslösung mit Gasdruck versorgt, so dass er sich linear oder schraubenförmig bewegt.

Vorzugsweise an den Behälter oder Kolben angeschlossene Seile, Hebel oder Bänder öffnen das "Fischmaul", bevor der Kolben einen Gasstrom in den Airbag freigibt.

Gemäss einem Aspekt schafft die Erfindung eine Airbagvorrichtung mit einem Airbagmodul hinter einer mehrteiligen Armaturentafel wobei Öffnungseinrichtungen vorgesehen sind, um die Armaturentafel vor, bei oder nach einer Auslösung der Airbagvorrichtung fischmaulartig zu öffnen. Dabei wird in geschickter Weise die Mehrteiligkeit der Armaturentafel ausgenutzt, um eine einfache, schnelle und zuverlässige Weise zu schaffen, eine Austrittsöffnung für einen Airbag zu öffnen, ohne dass der Airbag selbst die Kraft zum Öffnen der Öffnung bereitstellen muss und dadurch mit einer entsprechenden Wucht auf einen Insassen hin vordringt.

Vorzugsweise ist dabei weiter vorgesehen, dass die Armaturentafel wenigstens ein Armaturentafeloberteil oder ein Armaturentafelunterteil enthält, und dass die Öffnungseinrichtungen einen Kolben enthalten, der wenigstens mit dem Armaturentafeloberteil oder dem Armaturentafelunterteil zu dessen Öffnung beaufschlagbar und verstellbar ist. Dabei kann weiter vorgesehen sein, dass der Kolben über einem zylinderartigen Airbagmodul geführt ist, wobei vorzugsweise der Kolben zu einer schraubenartigen Linear- und Drehbewegung an dem Airbagmodul geführt ist. Alternativ oder zusätzlich kann vorgesehen sein, dass der Kolben mittels Zugeinrichtungen, insbesondere Seile, und/oder einer Mechanik an wenigstens ein Armaturentafeloberteil oder ein Armaturentafelunterteil angeschlossen ist.

Eine andere vorzugsweise Ausgestaltung der erfindungsgemäßen Airbagvorrichtung besteht darin, dass die Armaturentafel wenigstens ein Armaturentafeloberteil und/oder ein Armaturentafelunterteil enthält, die/das mittels der Öffnungseinrichtungen zur Bildung einer Öffnung für den Austritt eines Airbags verstellbar und/oder verformbar sind/ist.

Bei einem Betriebsverfahren für eine Airbagvorrichtung mit einem Airbagmodul hinter einer mehrteiligen Armaturentafel entsprechend der Bauart gemäß dem ersten Aspekt der vorliegenden Erfindung kann vorgesehen sein, dass die Armaturentafel vor, bei oder nach einer Auslösung der Airbagvorrichtung fischmaulartig geöffnet wird.

Eine mit Vorzug eingesetzte Weiterbildung dieses Betriebsverfahrens besteht darin, dass wenigstens ein Armaturentafeloberteil und/oder ein Armaturentafelunterteil zur Schaffung einer Öffnung in der Armaturentafel für den Austritt eines Airbags verstellt und/oder deformiert wird. Alternativ oder zusätzlich kann vorgesehen sein, dass das Öffnen der Armaturentafel durch einen Kolben bewirkt wird, wobei vorzugsweise der Kolben von einem Gasgenerator des Airbagmoduls betrieben wird, und wobei weiterhin vorzugsweise dieser Gasgenerator auch zur Erzeugung des Gases zum Befüllen des Airbags verwendet wird. Die letztere Ausgestaltung kann noch weiter dadurch ausgestaltet sein, dass das Befüllen des Airbags mit Gas aus dem Gasgenerator des Airbagmoduls durch die Stellung des Kolbens gesteuert wird.

Weiterhin ist es bei den vorstehend erläuterten Varianten des Betriebsverfahrens möglich und von Vorteil, wenn der Kolben zur Erzeugung der Öffnung in der Armaturentafel eine schraubenartige Linear-und Drehbewegung ausführt und über Zugmittel, insbesondere Seile, an die Armaturentafel gekoppelt ist.

Weitere bevorzugte und/oder vorteilhafte Ausgestaltungen der Erfindung ergeben sich aus den gesamten vorliegenden Anmeldungsunterlagen.

Die Erfindung wird nachfolgend anhand exemplarischer Ausführungsbeispiele unter Bezugnahme auf die Zeichnung näher erläutert. Darin zeigen
Fig. 1 ein erstes Ausführungsbeispiel einer Airbagvorrichtung ein einer schematischen Querschnittsansicht,
Fig. 2 ein zweites Ausführungsbeispiel einer Airbagvorrichtung ein einer schematischen Querschnittsansicht, und
Fig. 3 ein drittes Ausführungsbeispiel einer Airbagvorrichtung ein einer schematischen Querschnittsansicht.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

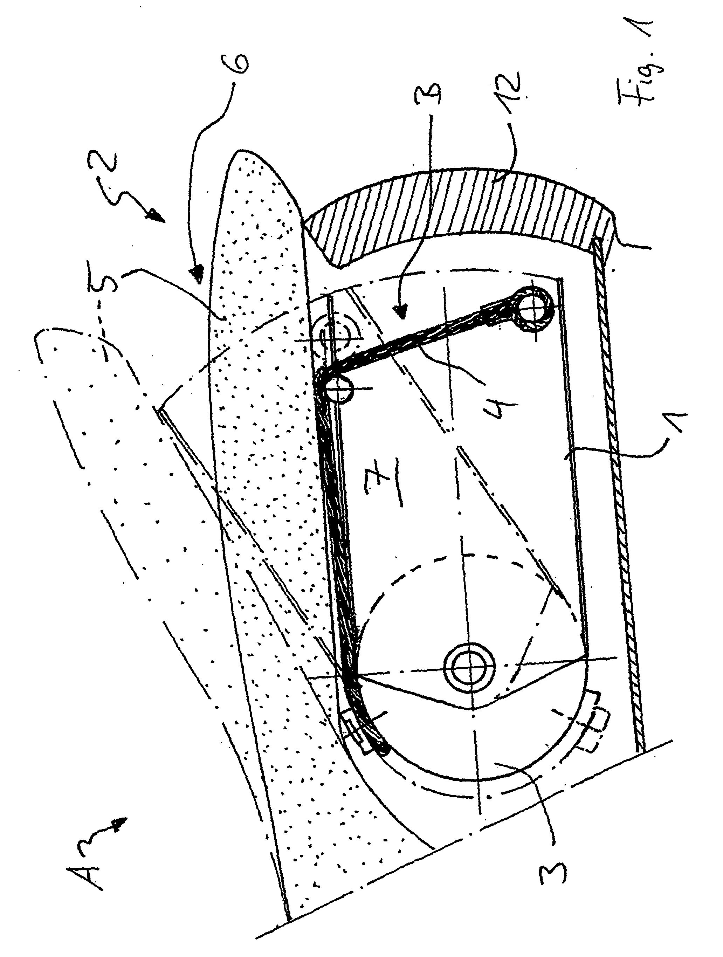

Die Fig. 1 zeigt einen Schnitt durch eine Airbagvorrichtung A mit einem Airbagmodul 1, das in einer mehrteiligen Armaturentafel 2 angeordnet ist. In diesem Fall ist ein Kolben 3 gezeigt, der sich nach einer Auslösung des Airbagmoduls 1 schraubenförmig axial längs des zylinderförmigen Airbagmoduls 1 bewegt. Der Kolben 3 ist tassenartig über das zylinderförmige Airbagmodul 1 gestülpt und an dem Kolben 3 sind Seile oder allgemein Zugeinrichtungen 4 angeschlossen. Wenn das Airbagmodul 1 ausgelöst wird, wird Gas von einem vorzugsweise pyrotechnischen Gasgenerator (nicht sichtbar) des Airbagmoduls 1 zunächst in den Kolben 3 geleitet, so dass letzterer beaufschlagt wird und sich unter schraubenartiger Drehung linear längs des zylinderförmigen Airbagmoduls 1 bewegt. Die Seile 4 werden dabei einerseits auf den Kolben 3 aufgewickelt und sind andererseits derart umgelenkt, dass sie das Airbagmodul 1 derartig schwenken und damit ein Armaturentafeloberteil 5 der mehrteiligen Armaturentafel 2 hochdrücken, dass eine unten gerade und oben "gewölbte" Airbagöffnung 6 freigegeben wird. Die Endlage des Airbagmodules 1 ist strichpunktiert gezeigt.

Das Airbagmodul 1 mit dem Kolben 3 und den Seilen 4 bildet bei diesem Ausführungsbeispiel Öffnungseinrichtungen B.

Der Gasgenerator zum Antrieb des Kolbens 3 kann ein gesonderter Gasgenerator oder der Gasgenerator sein, der das Gas zum Aufblasen des Airbags erzeugt. Es können auch andere Antriebsmittel für die Betätigung des Kolbens 3 eingesetzt werden. Ferner ist die Erfindung nicht darauf beschränkt, dass der Kolben schraubenartig geführt ist, um ein Aufwickeln der Seile 4 zu erzeugen. Der Kolben 3 kann auch nur linear geführt sein, wobei dann entsprechend geeignete Einrichtungen zum Übertragung der Kraft und Bewegung auf wenigstens ein Teil der mehrteiligen Armaturentafel 2 einzusetzen sind, um die Öffnung 6 schaffen zu können

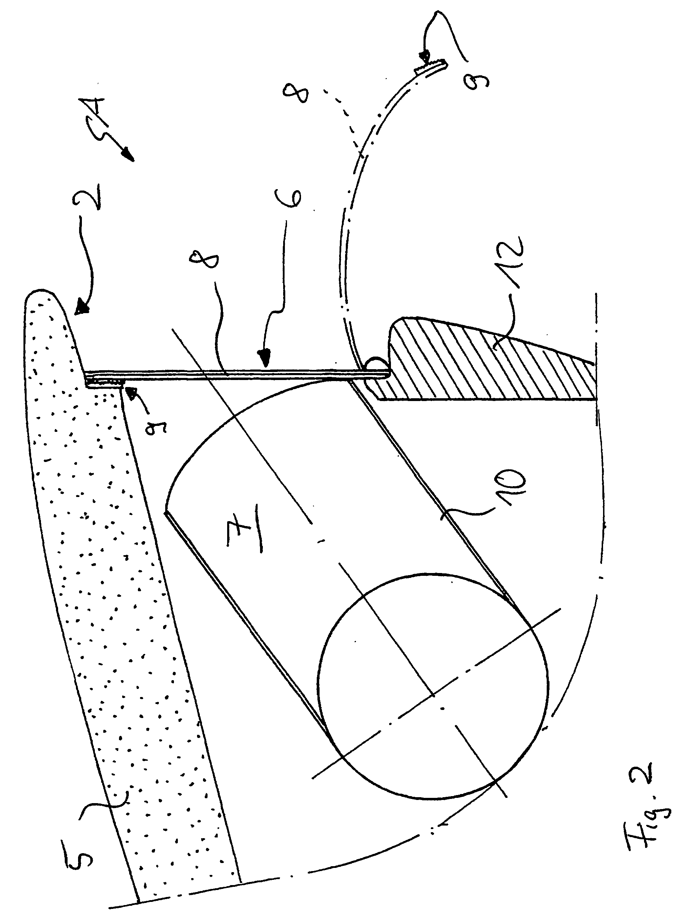

Die Fig. 2 zeigt eine Alternative eines nicht aggressiven nur stilisiert in seinem zusammengefalteten Zustand angedeuteten Airbags 7 eines Airbagmoduls 1. Bei diesem Ausfuhrungsbeispiel ist eine Airbagklappe 8 als Bestandteil der mehrteiligen Armaturentafel 2 aus einer Stoffabdeckung hergestellt, die mindestens einseitig ohne große Kraft aufreißt und z.B. nur mittels eines Klettbandes als Beispiel für Klettbandeinrichtungen oder allgemein Halteeinrichtungen 9 befestigt ist. Hierzu braucht das Airbagmodul 10 dann keine Mechanik.

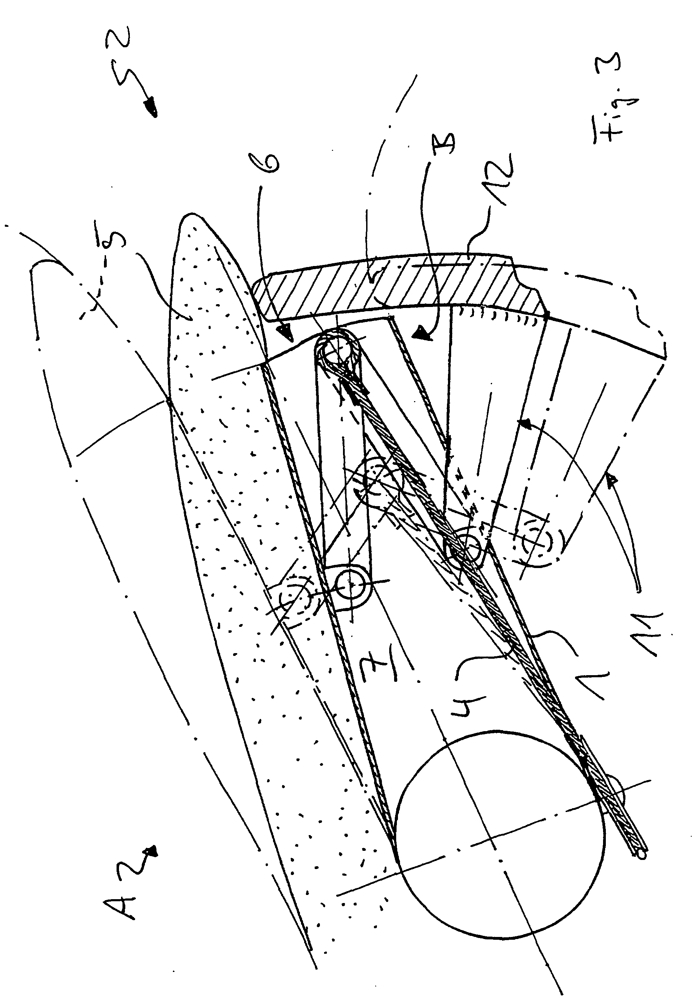

Die Fig. 3 zeigt ein drittes Ausführungsbeispiel einer Airbagvorrichtung A. Diese Airbagvorrichtung A ist dem Grunde nach aufgebaut wie jene, die in der Fig. 1 gezeigt und im Zusammenhang damit beschrieben wurde. Nachfolgend werden daher nurmehr Merkmale und Funktionen beschrieben, soweit sie über die Angaben zur Fig. 1 hinausgehen und es wird, um Wiederholungen zu vermeiden, insofern auf die Darstellung der und die Beschreibung zur Fig. 1 Bezug genommen. Die Airbagvorrichtung A gemäss der Fig. 3 enthält eine Mechanik oder insbesondere eine Hebelmechanik 11, die bei Aktivierung der Seile 4 über z.B. einen Kolben 3 das Armaturentafeloberteil 5 und ein Armaturentafelunterteil 12 derart auseinander drücken, dass eine fischmaulartige Airbagöffnung 6 entsteht. Dazu sind die Seile 4 außer an einerseits den Kolben 3 andererseits an die Hebelmechanik 11 angeschlossen. Diese Hebelmechanik 11 ist scherenartig ausgestaltet und erzeugt bei Zug durch die Seile, 4 eine Spreizwirkung zwischen dem Armaturentafeloberteil 5 und dem Arrnaturentafelunterteil 12, so dass die Öffnung 6 erzeugt wird.

Es ist auch möglich, z.B. bei dem Ausführungsbeispiel nach Fig. 1, das Verstellen des Airbagmoduls zum Aufstellen, Aufbiegen oder allgemein Öffnen wenigstens eines Teils der mehrteiligen Armaturentafel durch andere Mechaniken zu realisieren. Beispielsweise kann das Verstellen mit einem gesonderten insbesondere pyrotechnisch beaufschlagten Verstellzylinder durchgeführt werden. Ein oder mehrere solche Zylinder kann/können aber auch eingesetzt werden, um wenigstens einen Teil der mehrteiligen Armaturentafel direkt zu verstellen oder aufzudrücken oder -biegen. Wenn, was besonders vorteilhaft ist, für den Antrieb zum Öffnen wenigstens eines Teils der mehrteiligen Armaturentafel der Gasgenerator verwendet wird, der zum Aufblasen des Airbags ohnehin vorhanden ist, kann damit ein Kolben betrieben werden, der für das Verstellen oder Aufdrücken oder-biegen des wenigstens einen Teils der mehrteiligen Armaturentafel eingesetzt wird. Dazu kann der Kolben direkt oder über jegliche geeignete Mechanik und/oder mittels Bewegungsrichtungsumlenkungen an dem wenigstens einen Teil der mehrteiligen Armaturentafel angreifen. Dieser Kolben kann dabei gleichzeitig auf seinem Betätigungsweg beispielsweise ab einem vorgegebenen Verstellweg Leitungen freigeben, über die Gas vom Gasgenerator in den Airbag geleitet wird.

Ferner ist die vorliegende Erfindung nicht darauf beschränkt, dass die Airbagvorrichtung mit einer Armaturentafel kombiniert ist oder eine solche enthält. Vielmehr kann statt der Armaturentafel jegliche andere Abdeckung oder Verkleidung gemeint sein. Wesentlich ist nur, dass in der Abdeckung oder Verkleidung auf erfindungsgemäße Weise eine geeignete Öffnung erzeugt wird, durch die der Airbag austreten kann, ohne dass der Airbag selbst die Kraft für das Öffnen der Öffnung aufbringen muss, oder wobei nur eine sehr geringe Kraft von dem Airbag zum Öffnen der Öffnung aufgebracht werden muss, wie z.B. im Fall der Airbagklappe in Form einer Stoff- oder Folienabdeckung der Öffnung mit Kletthalterung.

Exemplarische Betriebsverfahren für die einzelnen Ausführungsbeispiele der Airbagvorrichtung A ergeben sich aus den Beschreibungen zu den Fig. 1 bis 3.

Zusammenfassend wird durch die Erfindung insbesondere eine durch Pyrotechnik angetriebene Mechanik geschaffen, die ohne direktes Zutun eines Airbags ein Teil einer mehrteiligen Armaturentafel unter Bildung einer fischmaulartigen Airbagaustrittsöffnung öffnet. Gemäß einer Alternative ist die Abdeckung aus textilem oder folienartigen Material o.ä., das außerdem so befestigt ist, dass es leicht zu öffnen ist. Mit allen Varianten der Erfindung werden Möglichkeiten gezeigt, dem Airbag die eventuell tödliche Aggressivität zu nehmen

### Bezeichnungen

- A: Airbagvorrichtung
- B: Öffnungseinrichtungen
- 1: Airbagmodul
- 2: Armaturentafel
- 3: Kolben
- 4: Zugeinrichtungen oder Seile
- 5: Armaturentafeloberteil
- 6: Airbagöffnung
- 7: Airbag
- 8: Airbagklappe
- 9: Halteeinrichtungen oder Klettbandeinrichtungen
- 10: Airbagmodul
- 11: Mechanik oder Hebelmechanik
- 12: Armaturentafelunterteil

## Patentansprüche

1. Airbagvorrichtung mit einem Airbagmodul hinter einer mehrteiligen Armaturentafel, wobei Öffnungseinrichtungen (B) vorgesehen sind, um die Armaturentafel (2) vor, bei oder nach einer Auslösung der Airbagvorrichtung (A) fischmaulartig zu öffnen, **dadurch gekennzeichnet, dass** die Armaturentafel (2) ein Armaturentafeloberteil (5) und/oder ein Armaturentafelunterteil (12) enthält, von denen wenigstens eines mittels der Öffnungseinrichtungen (B) zur Bildung einer Öffnung (6) in der Armaturentafel (2) für den Austritt eines Airbags verformbar ist.

2. Airbagvorrichtung nach Anspruch 1, **dadurch gekennzeichnet, dass** die Öffnungseinrichtungen (B) einen Kolben (3) enthalten, der wenigstens mit dem Armaturentafeloberteil (5) oder dem Armaturentafelunterteil (12) zu dessen Öffnung beaufschlagbar und verstellbar ist.

3. Airbagvorrichtung nach Anspruch 2, **dadurch gekennzeichnet, dass** der Kolben (3) über einem zylinderartigen Airbagmodul (1) geführt ist.

4. Airbagvorrichtung nach Anspruch 3, **dadurch gekennzeichnet, dass** der Kolben (3) zu einer schraubenartigen Linear- und Drehbewegung an dem Airbagmodul (1) geführt ist.

5. Airbagvorrichtung nach einem der Ansprüche 2 bis 4, **dadurch gekennzeichnet, dass** der Kolben (3) mittels Zugeinrichtungen (4), insbesondere Seilen (4), und/oder einer Mechanik (11) an wenigstens ein Armaturentafeloberteil (5) oder ein Armaturentafelunterteil (12) angeschlossen ist.

6. Airbagvorrichtung nach einem der vorhergehenden Ansprüche, **dadurch gekennzeichnet, dass** wenigstens das Armaturentafeloberteil (5) oder das Armatarentafelunterteil (12) mittels der Öffnungseinrichtungen (B) zur Bildung einer Öffnung (6) für den Austritt eines Airbags verstellbar ist.

7. Betriebsverfahren für eine Airbagvorrichtung mit einem Airbagmodul hinter einer mehrteiligen Armaturentafel, wobei die Armaturentafel (2) vor, bei oder nach einer Auslösung der Airbagvorrichtung (A) fischmaulartig geöffnet wird, **dadurch gekennzeichnet, dass** wenigstens ein Armaturentafeloberteil (5) oder ein Armaturentafelunterteil (12) zur Schaffung einer Öffnung (6) in der Armaturentafel (2) für den Austritt eines Airbags deformiert wird.

8. Betriebsverfahren für eine Airbagvorrichtung nach Anspruch 7, **dadurch gekennzeichnet, dass** wenigstens das Armaturentafeloberteil (5) oder das Armaturentafelunterteil (12) zur Schaffung einer Öffnung (6) in der Armaturentafel (2) für den Aus tritt eines Airbags verstellt wird.

9. Betriebsverfahren für eine Airbagvorrichtung nach Anspruch 7 oder 8, **dadurch gekennzeichnet, dass** das Öffnen der Armaturentafel (2) durch einen Kolben (3) bewirkt wird.

10. Betriebsverfahren für eine Airbagvorrichtung nach Anspruch 9, **dadurch gekennzeichnet, dass** der Kolben (3) von einem Gasgenerator des Airbagmoduls (1) betrieben wird, und dass vorzugsweise dieser Gasgenerator auch zur Erzeugung des Gases zum Befüllen des Airbags verwendet wird.

11. Betriebsverfahren für eine Airbagvorrichtung nach Anspruch 10, **dadurch gekennzeichnet, dass** das Befüllen des Airbags mit Gas aus dem Gasgenerator des Airbagmoduls (1) durch die Stellung des Kolbens (3) gesteuert wird.

12. Betriebsverfahren für eine Airbagvorrichtung nach einem der Ansprüche 9 bis 11, **dadurch gekennzeichnet, dass** der Kolben (3) zur Erzeugung der Öffnung (6) in der Armaturentafel (2) eine schraubenartige Linear-und Drehbewegung ausführt und über Zugmittel (4), insbesondere Seile (4), an die Armaturentafel (2) gekoppelt ist.

## Claims

1. Airbag device having an airbag module behind a multi-part dashboard, opening devices (B) being provided in order to open the dashboard (2) in the manner of a mouth of a fish before, during or after a triggering of the airbag device (A), **characterized in that** the dashboard (2) contains a dashboard upper part (5) and/or a dashboard lower part (12), of which at least one can be deformed by means of the opening devices (B) in order to form an opening (6) in the dashboard (2) for the emergence of an airbag.

2. Airbag device according to Claim 1, **characterized in that** the opening devices (B) contain a piston (3) which can be acted upon and adjusted at least by means of the dashboard upper part (5) or the dashboard lower part (12) in order to open it.

3. Airbag device according to Claim 2, **characterized in that** the piston (3) is guided via a cylinder-like airbag module (1).

4. Airbag device according to Claim 3, **characterized in that** the piston (3) is guided into a screw-like linear and rotational movement on the airbag module (1).

5. Airbag device according to one of Claims 2 to 4, **characterized in that** the piston (3) is connected to at least one dashboard upper part (5) or dashboard lower part (12) by means of tensioning devices (4), in particular cables (4), and/or a mechanism (11).

6. Airbag device according to one of the preceding claims, **characterized in that** at least the dashboard upper part (5) or the dashboard lower part (12) can be adjusted by means of the opening devices (B) in order to form an opening (6) for the emergence of an airbag.

7. Operating method for an airbag device having an airbag module behind a multi-part dashboard, the dashboard (2) being opened in the manner of a mouth of a fish before, during or after a triggering of the airbag device (A), **characterized in that** at least one dashboard upper part (5) or dashboard lower part (12) is deformed in order to provide an opening (6) in the dashboard (2) for the emergence of an airbag.

8. Operating method for an airbag device according to Claim 7, **characterized in that** at least the dashboard upper part (5) or the dashboard lower part (12) is adjusted in order to provide an opening (6) in the dashboard (2) for the emergence of an airbag.

9. Operating method for an airbag device according to Claim 7 or 8, **characterized in that** the opening of the dashboard (2) is brought about by a piston (3).

10. Operating method for an airbag device according to Claim 9, **characterized in that** the piston (3) is operated by a gas generator of the airbag module (1), and **in that** this gas generator is preferably also used for producing the gas to fill the airbag.

11. Operating method for an airbag device according to Claim 10, **characterized in that** the filling of the airbag with gas from the gas generator of the airbag module (1) is controlled by the position of the piston (3).

12. Operating method for an airbag device according to one of Claims 9 to 11, **characterized in that** the piston (3) executes a screw-like linear and rotational movement to produce the opening (6) in the dashboard (2) and is coupled to the dashboard (2) via tensioning means (4), in particular cables (4).

## Revendications

1. Dispositif à coussin gonflable de sécurité comprenant un module à coussin gonflable de sécurité derrière un tableau de bord en plusieurs parties, des dispositifs d'ouverture (B) étant prévus pour ouvrir le tableau de bord (2) avant, pendant ou après un déclenchement du dispositif à coussin gonflable de sécurité (A) à la manière d'une bouche de poisson, **caractérisé en ce que** le tableau de bord (2) comprend une partie supérieure de tableau de bord (5) et/ou une partie inférieure de tableau de bord (12) dont une au moins peut être déformée au moyen des dispositifs d'ouverture (B) en vue de former une ouverture (6) dans le tableau de bord (2) pour la sortie d'un coussin gonflable de sécurité.

2. Dispositif à coussin gonflable de sécurité selon la revendication 1, **caractérisé en ce que** les dispositifs d'ouverture (B) comprennent un piston (3) qui peut être sollicité et qui est déplaçable au moins avec la partie supérieure du tableau de bord (5) ou la partie inférieure du tableau de bord (12) en vue de son ouverture.

3. Dispositif à coussin gonflable de sécurité selon la revendication 2, **caractérisé en ce que** le piston (3) est guidé par le biais d'un module à coussin gonflable de sécurité (1) de type cylindre.

4. Dispositif à coussin gonflable de sécurité selon la revendication 3, **caractérisé en ce que** le piston (3) est guidé sur le module à coussin gonflable de sécurité (1) pour effectuer un mouvement linéaire et rotatif de type hélicoïdal.

5. Dispositif à coussin gonflable de sécurité selon l'une des revendications 2 à 4, **caractérisé en ce que** le piston (3) est raccordé à au moins une partie supérieure du tableau de bord (5) ou à une partie inférieure du tableau de bord (12) au moyen de dispositifs de traction (4), notamment des câbles (4) et/ou un mécanisme (11).

6. Dispositif à coussin gonflable de sécurité selon l'une des revendications précédentes, **caractérisé en ce qu'**au moins la partie supérieure du tableau de bord (5) ou la partie inférieure du tableau de bord (12) peut être déplacée au moyen des dispositifs d'ouverture (B) en vue de former une ouverture (6) pour la sortie d'un coussin gonflable de sécurité.

7. Procédé d'utilisation pour un dispositif à coussin gonflable de sécurité comprenant un module à coussin gonflable de sécurité derrière un tableau de bord en plusieurs parties, le tableau de bord (2) étant ouvert à la manière d'une bouche de poisson avant, pendant ou après un déclenchement du dispositif à coussin gonflable de sécurité (A), **caractérisé en ce qu'**au moins une partie supérieure de tableau de bord (5) ou une partie inférieure de tableau de bord (12) est déformée en vue de former une ouverture (6) dans le tableau de bord (2) pour la sortie d'un coussin gonflable de sécurité.

8. Procédé d'utilisation pour un dispositif à coussin gonflable de sécurité selon la revendication 7, **caractérisé en ce qu'**au moins la partie supérieure du tableau de bord (5) ou la partie inférieure du tableau de bord (12) est déplacée en vue de former une ouverture (6) dans le tableau de bord (2) pour la sortie d'un coussin gonflable de sécurité.

9. Procédé d'utilisation pour un dispositif à coussin gonflable de sécurité selon la revendication 7 ou 8, **caractérisé en ce que** l'ouverture du tableau de bord (2) est provoquée par un piston (3).

10. Procédé d'utilisation pour un dispositif à coussin gonflable de sécurité selon la revendication 9, **caractérisé en ce que** le piston (3) est entraîné par un générateur de gaz du module à coussin gonflable de sécurité (1) et que ce générateur de gaz est de préférence également utilisé pour produire le gaz destiné à remplir le coussin gonflable de sécurité.

11. Procédé d'utilisation pour un dispositif à coussin gonflable de sécurité selon la revendication 10, **caractérisé en ce que** le remplissage du coussin gonflable de sécurité avec du gaz en provenance du générateur de gaz du module à coussin gonflable de sécurité (1) est commandé par la position du piston (3).

12. Procédé d'utilisation pour un dispositif à coussin gonflable de sécurité selon l'une des revendications 9 à 11, **caractérisé en ce que** le piston (3) exécute un mouvement linéaire et rotatif hélicoïdal pour produire l'ouverture (6) dans le tableau de bord (2) et qu'il est couplé au tableau de bord (2) par des moyens de traction (4), notamment des câbles (4).
